# EUROPÄISCHE PATENTSCHRIFT

(11) **EP 4 194 744 B1**
(45) Veröffentlichungstag und Bekanntmachung des Hinweises auf die Patenterteilung: **12.06.2024**
(21) Anmeldenummer: 22203122.1
(22) Anmeldetag: 21.10.2022
(51) Int. Cl.: F21S 41/153, F21S 41/255, F21S 41/25, F21S 41/43, F21S 41/143, G02B 5/00, G02B 27/09, G02B 19/00, G02B 27/00

(54) **LICHTMODUL EINES KRAFTFAHRZEUGSCHEINWERFERS UND KRAFTFAHRZEUGSCHEINWERFER MIT EINEM SOLCHEN LICHTMODUL**
LIGHT MODULE OF A MOTOR VEHICLE HEADLIGHT AND MOTOR VEHICLE HEADLIGHT COMPRISING SUCH A LIGHT MODULE
MODULE LUMINEUX D'UN PROJECTEUR DE VÉHICULE AUTOMOBILE ET PROJECTEUR DE VÉHICULE AUTOMOBILE COMPRENANT UN TEL MODULE LUMINEUX

(30) Priorität: 10.12.2021 DE 102021132692
(43) Veröffentlichungstag der Anmeldung: 14.06.2023
(73) Patentinhaber: Marelli Automotive Lighting Reutlingen (Germany) GmbH, 72762 Reutlingen (DE)
(72) Erfinder: KNITTEL, Joachim, 72762 Reutlingen (DE); ROSENHAHN, Ernst-Olaf, 72762 Reutlingen (DE); SCHILDMANN, Sebastian, 72762 Reutlingen (DE)
(74) Vertreter: Wörz, Volker Alfred

(56) Entgegenhaltungen:
- EP-A2- 2 306 074
- WO-A1-2016/161471
- CN-A- 111 219 679
- DE-A1-102013 227 194
- DE-A1-102019 118 264

## Beschreibung

Die vorliegende Erfindung betrifft ein Lichtmodul eines Kraftfahrzeugscheinwerfers, umfassend
- eine Matrix-Lichtquelle mit einer Vielzahl von matrixartig angeordneten, einzeln ansteuerbaren Einzellichtquellen, die abhängig von ihrer Ansteuerung jeweils mehr oder weniger Licht zum Erzeugen eines einzelnen Lichtpunkts emittieren, und
- ein Linsensystem zum Abbilden der von der Matrix-Lichtquelle erzeugten Lichtpunkte auf einer Fahrbahn vor dem Kraftfahrzeug zur Erzeugung einer resultierenden Lichtverteilung des Lichtmoduls, wobei das Linsensystem mehrere in einem Strahlengang hintereinander angeordnete Einzellinsen aufweist.

Ferner betrifft die Erfindung einen Kraftfahrzeugscheinwerfer umfassend ein Gehäuse mit einer durch eine transparente Abdeckscheibe verschlossenen Lichtaustrittsöffnung und ein in dem Gehäuse angeordnetes Lichtmodul der genannten Art, das zur Realisierung zumindest eines Teils einer resultierenden Lichtverteilung des Scheinwerfers Licht in einer Haupt-Lichtaustrittsrichtung auf einer Fahrbahn vor dem Kraftfahrzeug abbildet.

Aus dem Stand der Technik sind Lichtmodule von Kraftfahrzeugscheinwerfern zur Erzeugung einer adaptiven Lichtverteilung bekannt, wobei die Lichtmodule jeweils eine Matrix-LED und eine Projektionslinse aufweisen. Die Matrix-LED umfasst eine Vielzahl matrixartig über- und nebeneinander bzw. versetzt zueinander angeordnete, einzeln ansteuerbare LEDs, die je nach Ansteuerung mehr oder weniger bzw. hellere oder dunklere Lichtpunkte (sog. Pixel) der resultierenden Lichtverteilung erzeugen. Nach dem derzeitigen Stand der Technik umfasst eine Matrix-LED typischerweise zwischen 200 und 20.000 einzeln ansteuerbare Pixel auf.

Die Projektionslinse bildet die von der Matrix-LED emittierten Lichtpunkte bzw. die auf der Matrix-LED erzeugt Lichtverteilung als resultierende Lichtverteilung des Lichtmoduls auf einer Fahrbahn vor dem Kraftfahrzeug ab. Dabei kann die adaptive veränderbare Lichtverteilung ohne bewegte Teile des Lichtmoduls erzeugt werden. Durch gezielte Ansteuerung der Matrix-LED kann die Lichtverteilung dynamisch bspw. zwischen einer Abblendlichtverteilung, einer Teilfernlichtverteilung (d.h. einem Fernlicht, bei dem die Bereiche der Lichtverteilung, in denen andere Verkehrsteilnehmer detektiert wurden, ausgeblendet oder gedimmt sind), einer dynamischen Kurvenlichtverteilung (d.h. das Kurvenlicht leuchtet umso weiter in eine von dem Kraftfahrzeug durchfahrene Kurve hinein, desto enger die Kurve ist), einer Stadtlichtverteilung, einer Landstraßenlichtverteilung, einer Autobahnlichtverteilung, einem vollen Fernlicht etc. verändert werden.

Es ist ferner bekannt, die Projektionslinse aus mehreren in Lichtdurchtrittsrichtung hintereinander angeordneten Linsenelemente aufzubauen. Aus Gewichts- und Kostengründen wird versucht, die Projektionslinse aus möglichst wenigen, kostengünstigen Linsenelementen herzustellen. Solche Systeme neigen jedoch dazu, dass die Abbildungsqualität am Rand stark abnimmt. Im Allgemeinen ist die Abbildungsqualität am Rand nicht so wichtig, dennoch darf sie einen vom Kunden (d.h. dem Fahrzeughersteller) festgelegten Grenzwert nicht unterschreiten.

Derartige Lichtmodule sind bspw. aus der DE 10 2019 202 434 A1 und der DE 10 2019 102 475 A1 bekannt. Die dort offenbarten Lichtmodule zeigen Projektionslinsensysteme bestehend aus drei bis fünf Einzellinsen, die teilweise sehr stark asphärisch sind, mit relativ guten Abbildungseigenschaften. Solche Einzellinsen sind allerdings teuer und erfordern eine hohe Präzision bei der Herstellung und Montage. Darüber hinaus ist es bekannt, z.B. aus Eugene Hecht: Optics, 4. Auflage, Pearson 2002, dass das Einbringen einer Blende (sog. Apodisation) in ein Linsensystem die optischen Abbildungseigenschaften positiv beeinflussen kann. Ein Lichtmodul eines Kraftfahrzeugscheinwerfers mit einem Linsensystem, das sich diese Eigenschaften zu Nutze macht, ist bspw. aus der DE 10 2020 100 762 A1 bekannt. Dort dient als sog. Aperturblende eine Linsenfassung von mindestens einer Einzellinse des abbildenden Linsensystems. Diese Linsenfassungen weisen in der Regel eine runde Form auf. Zudem ist die Form der Linsenfassung nicht frei veränderbar, da sich dadurch auch die Form der Einzellinse ändern würde. Insofern fehlt es dem bekannten Lichtmodul an der erforderlichen Flexibilität, um die optischen Abbildungseigenschaften optimal verbessern zu können. In WO 2016/161471 und EP2306074 A2 ist jeweils eine Beleuchtungsvorrichtung für einen Kraftfahrzeugscheinwerfer offenbart, wobei eine Blende zwischen der Primäroptik und der Sekundäroptik angeordnet ist.

Ausgehend von dem beschriebenen Stand der Technik liegt der vorliegenden Erfindung die Aufgabe zugrunde, die Abbildungseigenschaften eines Linsensystems in einem Lichtmodul mit Matrix-Lichtquelle in den Randbereichen der abgebildeten Lichtverteilung mit einfachen Mitteln zu verbessern.

Zur Lösung dieser Aufgabe wird ein Lichtmodul mit den Merkmalen des Anspruchs 1 vorgeschlagen. Insbesondere wird ausgehend von dem Lichtmodul der eingangs genannten Art vorgeschlagen, dass das Lichtmodul ferner eine in den Strahlengang zwischen der Matrix-Lichtquelle und einer ersten Einzellinse des Linsensystems eingebrachte Blende umfasst, die ausgebildet ist, eine selektive Wirkung auf Randbereiche der abgebildeten Lichtverteilung des Lichtmoduls zu haben.

Durch das Einbringen einer speziellen Blende zwischen der Matrix-Lichtquelle und einer ersten Einzellinse des abbildenden Linsensystems kann erreicht werden, dass sich die Abbildungseigenschaften in den Randbereichen der resultierenden Lichtverteilung verbessern und dass sich gleichzeitig die Abbildungseigenschaften und die Effizienz im Zentrum (nahe einer optischen Achse des Lichtmoduls) nicht verändern. Darüber hinaus reduziert die Blende das Streulicht, und sie kann kostengünstig in eine Halterung der ersten Einzellinse integriert werden. Ein weiterer Vorteil ist, dass die Blende es erlaubt, den Durchmesser einiger im Strahlengang nachfolgender Einzellinsen zu verringern, was Gewicht und Materialkosten spart.

Gemäß einer vorteilhaften Weiterbildung der Erfindung wird vorgeschlagen, dass die Blende ausgebildet ist, auf einen Bereich im Zentrum der Matrix-Lichtquelle keinen Einfluss zu haben. Dementsprechend kann ferner vorgesehen sein, dass die Blende ausgebildet ist, eine Lichtstärke in einem Randbereich der abgebildeten Lichtverteilung zu reduzieren. Die Lichtstärke gibt den auf den Raumwinkel bezogenen Lichtstrom an.

Besonders bevorzugt ist die Blende ausgebildet, die Lichtstärke in einem Randbereich der abgebildeten Lichtverteilung auf 40% bis 70% eines Wertes ohne die Blende zu reduzieren. Mit anderen Worten, das Einbringen der Blende in den Strahlengang bewirkt in dem Randbereich der abgebildeten Lichtverteilung eine Reduzierung der Lichtstärke (bzw. des Lichtstroms) um etwa 30% bis 60%.

Gemäß einer bevorzugten Ausführungsform der Erfindung wird vorgeschlagen, dass das Lichtmodul eine im Strahlengang zwischen zwei Einzellinsen des Linsensystems angeordnete Aperturblende aufweist, und dass Ausgestaltung und Abmessungen der Blende derart gewählt sind, dass eine von der Aperturblende vorgegebene numerische Apertur des Linsensystems auf einer optischen Achse des Lichtmoduls, also im Zentrum der abgebildeten Lichtverteilung, gerade nicht verringert wird. Lediglich in einem Randbereich der abgebildeten Lichtverteilung kann durch die Blende die numerische Apertur des Linsensystems verringert werden.

Gemäß der Erfindung wird vorgeschlagen dass die Blende eine Lichtdurchtrittsöffnung umfasst, die eine zentrale Hauptöffnung und seitlich davon flächenmäßig kleinere Nebenöffnungen aufweist, wobei die Nebenöffnungen jeweils in einem Übergangsbereich der Lichtdurchtrittsöffnung in die Hauptöffnung übergehen. Die zentrale Hauptöffnung ist flächenmäßig größer als die einzelnen Nebenöffnungen, um eine Verringerung der numerischen Apertur auf der optischen Achse des Lichtmoduls weitgehend zu vermeiden. Die seitlichen Nebenöffnungen sind jeweils kleiner als die Hauptöffnung, da durch sie die numerische Apertur des Linsensystems in den Randbereichen der abgebildeten Lichtverteilung verringert wird. Insbesondere wird durch die Nebenöffnungen eine von der Aperturblende des Lichtmoduls vorgegebene numerische Apertur verringert. Es wird ferner vorgeschlagen, dass die zentrale Hauptöffnung eine im Wesentlichen rechteckige Form aufweist, wobei eine Breite (2b) der Hauptöffnung kleiner ist als eine Höhe (2c) der Hauptöffnung und/oder dass die seitlichen Nebenöffnungen eine im Wesentlichen rechteckige Form aufweisen.

Gemäß der Erfindung wird vorgeschlagen, dass die zentrale Hauptöffnung eine Höhe (2c) aufweist, die derart gewählt ist, dass ein Durchmesser von mindestens einem Lichtbündel, das von mindestens einer zentralen Einzellichtquelle der Matrix-Lichtquelle ausgesandt wurde, durch die Blende nicht beschränkt ist. Dadurch wird erreicht, dass eine Verringerung der numerischen Apertur auf der optischen Achse des Lichtmoduls weitgehend vermieden wird.

In entsprechender Weise wird vorgeschlagen, dass die seitlichen Nebenöffnungen eine Höhe (2d) aufweisen, die derart gewählt ist, dass ein Durchmesser von mindestens einem Lichtbündel, das von mindestens einer in einem seitlichen Randbereich der Matrix-Lichtquelle angeordneten Einzellichtquelle ausgesandt wurde, durch die Blende nach oben und unten abgeschnitten ist. Auf diese Weise wird erreicht, dass durch die Nebenöffnungen die numerische Apertur des Linsensystems in den Randbereichen der abgebildeten Lichtverteilung nach oben und unten hin verringert wird.

In diesem Sinne wird vorgeschlagen, dass die zentrale Hauptöffnung eine Höhe (2c) aufweist und dass die seitlichen Nebenöffnungen jeweils eine Höhe (2d) aufweisen, die etwa 40% bis 60% der Höhe (2c) der Hauptöffnung ist.

Vorteilhafterweise sind die seitlichen Nebenöffnungen jeweils derart in der Blende angeordnet und ausgebildet, dass ein Durchmesser von mindestens einem Lichtbündel, das von mindestens einer in einem seitlichen Randbereich der Matrix-Lichtquelle angeordneten Einzellichtquelle ausgesandt wurde, durch die Blende auf einem der Hauptöffnung gegenüberliegenden Randbereich der Nebenöffnung abgeschnitten ist. Auf diese Weise wird erreicht, dass durch die Nebenöffnungen die numerische Apertur des Linsensystems in den Randbereichen der abgebildeten Lichtverteilung zur Seite nach außen hin verringert wird.

In diesem Sinne wird vorgeschlagen, dass die Lichtdurchtrittsöffnung eine Gesamtbreite (2a) aufweist und dass die zentrale Hauptöffnung eine Breite (2b) aufweist, die in etwa 40% bis 60% der Gesamtbreite (2a) der Lichtdurchtrittsöffnung ist.

Gemäß einer bevorzugten Ausführungsform wird vorgeschlagen, dass sich die Höhe der Lichtdurchtrittsöffnung in dem Übergangsbereich von einer Höhe (2d) der Nebenöffnungen über einen Randbereich der Lichtdurchtrittsöffnung mit schrägem oder gebogenem, insbesondere nach außen gewölbtem, Verlauf auf eine Höhe (2c) der Hauptöffnung erweitert.

Insbesondere wird vorgeschlagen, dass der Übergangsbereich eine Breite (2e) aufweist, die etwa 5% bis 20% der Gesamtbreite (2a) der Lichtdurchtrittsöffnung ist oder alternativ, dass der Übergangsbereich eine Breite (2e) von Null aufweist. Weitere Merkmale und Vorteile der vorliegenden Erfindung werden nachfolgend unter Bezugnahme auf die Figuren näher erläutert.

Es zeigen:
- Figur 1: ein erfindungsgemäßes Lichtmodul in einer bevorzugten Ausführungsform in einer schematischen Seitenansicht;
- Figur 2: eine Blende eines erfindungsgemäßen Lichtmoduls in einer bevorzugten Ausführungsform in einer Draufsicht;
- Figur 3: eine Matrix-Lichtquelle eines erfindungsgemäßen Lichtmoduls in einer bevorzugten Ausführungsform in einer Draufsicht;
- Figur 4: einen Ausschnitt einer Blende eines erfindungsgemäßen Lichtmoduls in einer bevorzugten Ausführungsform in einer Draufsicht;
- Figur 5: einen Radius R eines Lichtbündels mindestens einer Einzellichtquelle, die entlang einer quer zu einer optischen Achse des Lichtmoduls und von einem Zentrum A zu einem Randbereich C der Matrix-Lichtquelle verläuft, verschoben wird, mit Blende (gestrichelt) und ohne Blende (durchgezogen);
- Figur 6: einen relativen Lichtstrom L eines Lichtbündels mindestens einer Einzellichtquelle, die entlang einer quer zu einer optischen Achse des Lichtmoduls und von einem Zentrum A zu einem Randbereich C der Matrix-Lichtquelle verläuft, verschoben wird, mit Blende (gestrichelt) und ohne Blende (durchgezogen);
- Figur 7: ein Testbild in der Form eines leuchtenden Streifens auf der Matrix-Lichtquelle durch die optische Achse des Lichtmoduls ohne Blende;
- Figur 8: ein Testbild in der Form eines leuchtenden Streifens auf der Matrix-Lichtquelle durch die optische Achse des Lichtmoduls mit Blende;
- Figur 9: eine erste alternative Blendenform in einer Draufsicht;
- Figur 10: eine zweite alternative Blendenform in einer Draufsicht; und
- Figur 11: einen erfindungsgemäßen Kraftfahrzeugscheinwerfer in einer schematischen Ansicht.

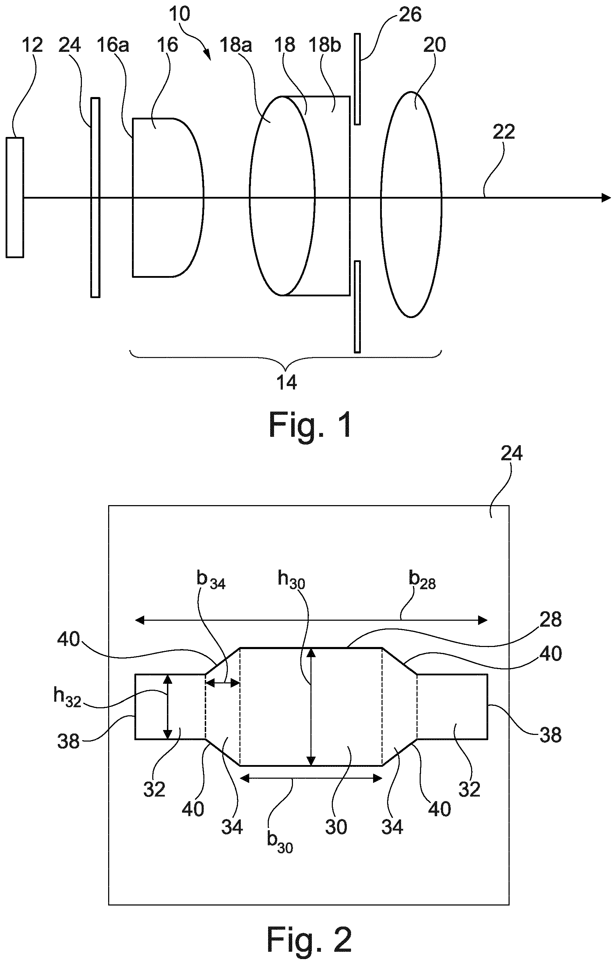

In Figur 1 ist ein erfindungsgemäßes Lichtmodul eines Kraftfahrzeugscheinwerfers in einer bevorzugten Ausführungsform in seiner Gesamtheit mit dem Bezugszeichen 10 bezeichnet. Das Lichtmodul 10 umfasst eine Matrix-Lichtquelle 12 mit einer Vielzahl von matrixartig angeordneten, einzeln ansteuerbaren Einzellichtquellen, die abhängig von ihrer Ansteuerung jeweils mehr oder weniger Licht zum Erzeugen eines einzelnen Lichtpunkts (sog. Pixel) emittieren. Die Einzellichtquellen können neben- und/oder übereinander oder versetzt zueinander angeordnet sein, so dass der Begriff "matrixartig" im Sinne der vorliegenden Erfindung auch eine Reihe von mehreren neben- oder übereinander angeordneten Einzellichtquellen umfasst. Bevorzugt umfasst die Matrix-Lichtquelle 12 jedoch mehrere in Reihen und Spalten matrixartig angeordnete Einzellichtquellen. In dem gezeigten Beispiel ist die Lichtquelle 12 als eine Matrix-LED ausgebildet, die eine Vielzahl von matrixartig angeordneten Einzel-LEDs umfasst, die jeweils ein Pixel erzeugen können.

Ferner umfasst das Lichtmodul 10 ein Linsensystem 14 zum Abbilden der von der Matrix-Lichtquelle 12 erzeugten Lichtpunkte auf eine Fahrbahn vor dem Kraftfahrzeug zur Erzeugung einer resultierenden Lichtverteilung des Lichtmoduls 10. Die Lichtverteilung kann zur Realisierung einer Leuchtenfunktion (z.B. Nebellicht, Abbiege- oder Kurvenlicht, Tagfahrlicht, Positionslicht, etc.) oder zumindest eines Teils einer Scheinwerferfunktion (z.B. Abblendlicht, Fernlicht, Abblendlicht-Grundlicht, Abblendlicht-Spotlicht, Fernlicht-Grundlicht, Fernlicht-Spotlicht, Teilfernlicht etc.) genutzt werden. Bei einem Teilfernlicht wird ein Bereich einer Fernlichtverteilung, in dem ein anderer z.B. vorausfahrender oder entgegenkommender Verkehrsteilnehmer detektiert wurde, ausgeblendet, um für den Fahrer des Kraftfahrzeugs eine optimale Ausleuchtung des Vorfelds vor dem Kraftfahrzeug ohne eine Blendung des detektierten Verkehrsteilnehmers zu realisieren.

Das Linsensystem 14 weist mehrere in einem Strahlengang hintereinander angeordnete Einzellinsen 16, 18, 20 auf. In dem gezeigten Beispiel ist die erste Einzellinse 16 als eine plankonvexe Glaslinse ausgebildet, deren plane Seite eine Lichteintrittsfläche 16a darstellt. Die zweite Einzellinse 18 ist in dem Beispiel als ein Achromat (achromatischer Zweilinser) ausgebildet, um die Auswirkungen einer chromatischen Aberration zu verringern, nach Möglichkeit sogar ganz zu vermeiden. Durch Kombination einer positiven Linse 18a und einer negativen Linse 18b aus transparentem Material mit unterschiedlich steilem Brechzahlverlauf, d.h. mit unterschiedlicher Abbe-Zahl, lässt sich eine Umkehr im Verlauf der Schnittweite mit der Wellenlänge erreichen, und der Farblängsfehler der chromatischen Aberration ist korrigiert. Die dritte Einzellinse 20 wird in dem Beispiel durch eine bikonvexe Kunststofflinse gebildet. Das Linsensystem 14 bzw. die Kombination der Einzellinsen 16, 18, 20 bildet eine Projektionsoptik, welche die Einzel-Lichtverteilungen auf den Lichtaustrittsflächen der Einzellichtquellen (bzw. die Lichtverteilung auf der Matrix-Lichtquelle 12) entlang einer optischen Achse 22 des Lichtmoduls 10 in Fahrtrichtung des Kraftfahrzeugs als resultierende Lichtverteilung des Lichtmoduls 10 auf der Fahrbahn abbildet.

Es wird vorgeschlagen, dass das Lichtmodul 10 eine Blende 24 aufweist, die sich zwischen der ersten Einzellinse 16 und der Matrix-Lichtquelle 12 befindet. Ferner kann das Lichtmodul 10 eine weitere Blende in der Form einer Apperturblende 26 zwischen zwei der Einzellinsen 16, 18, 20 aufweisen. In dem gezeigten Beispiel ist eine Apperturblende 26 zwischen der zweiten Einzellinse 18 und der dritten Einzellinse 20 angeordnet. Die Apperturblende 26 beschränkt eine numerische Apertur des Linsensystems 14.

Bevorzugt befindet sich die Blende 24 nahe an der Matrix-Lichtquelle 12. Ein Abstand zwischen der Matrix-Lichtquelle 12 und der Blende 24 liegt bevorzugt in einem Bereich von 2mm und 6mm. Die Nähe der Blende 24 zu der Matrix-Lichtquelle 12 ist wichtig, denn nur dann sind die von der Matrix-Lichtquelle 12 ausgehenden Lichtbündel genügend räumlich voneinander getrennt, und kann die Blende 24 so ausgelegt werden, dass sie eine selektive Wirkung auf Randbereiche der abgebildeten Lichtverteilung des Lichtmoduls 10 hat. Das Lichtmodul 10 mit der Blende 24 dient zur Verbesserung der Modulationstransferfunktion (MTF).

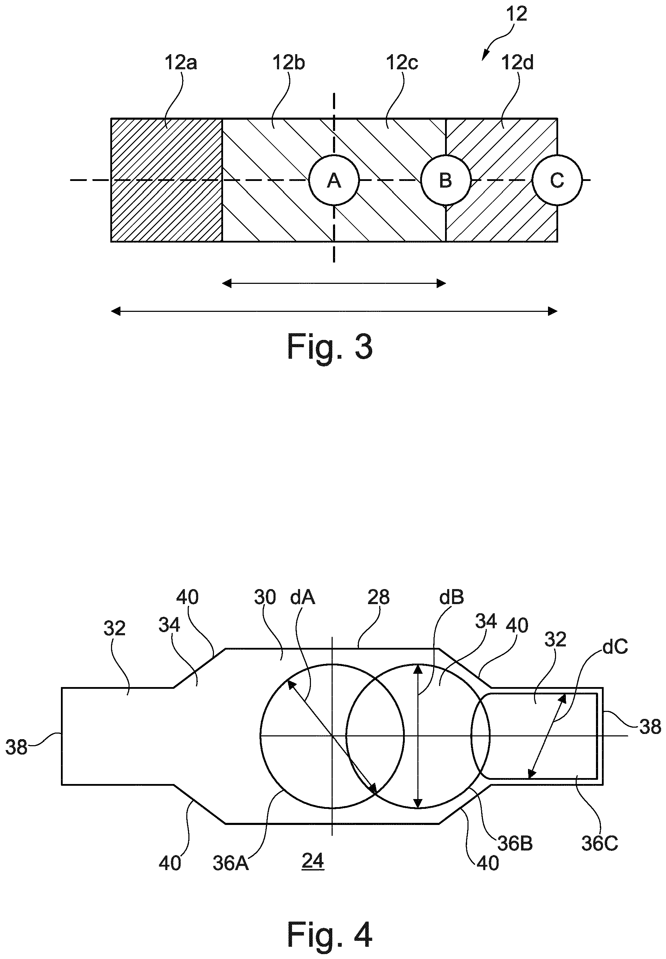

Ein Beispiel für die Blende 24 ist in Figur 2 in einer Draufsicht (z.B. entgegen einer Lichtaustrittsrichtung der Lichtstrahlen) gezeigt. Ein Beispiel für eine Matrix-Lichtquelle 12 mit vier in einer Reihe nebeneinander angeordneten Einzellichtquellen 12a, 12b, 12c, 12d (Seitenverhältnis 1:4) ist in Figur 3 in einer Draufsicht gezeigt. Die optische Achse 22 steht senkrecht auf einem Zentrum des Punktes bzw. Bereichs A. Die Lichtabstrahlflächen der Einzellichtquellen 12a, 12b, 12c, 12d haben alle in etwa die gleichen Abmessungen bzw. die gleiche Fläche.

Die Blende 24 ist so ausgestaltet, dass sie auf den Bereich im Zentrum der Matrix-Lichtquelle 12 bzw. auf die von den Einzellichtquellen in diesem Bereich emittierten Lichtbündel, keinen Einfluss hat. Somit hat die Blende 24 bspw. keinen Einfluss auf das Licht aus den Punkten bzw. Bereichen A und B der Matrix-Lichtquelle 12 in Figur 3. Ferner ist die Blende 24 so ausgestaltet, dass die Lichtstärke am Rand der Matrix-Lichtquelle 12 bzw. der von diesem Bereich emittierten Lichtbündel, auf 40% bis 70% des Wertes ohne Blende 24 reduziert wird. Somit reduziert die Blende 24 bspw. die Lichtstärke des Lichts aus dem Punkt bzw. dem Bereich C der Matrix-Lichtquelle 12 in Figur 3 um 30% bis 60%.

Die Blende 24 umfasst eine Lichtdurchtrittsöffnung 28, die eine zentrale Hauptöffnung 30 und seitlich davon flächenmäßig kleinere Nebenöffnungen 32 aufweist, wobei die Nebenöffnungen 32 jeweils in einem Übergangsbereich 34 der Lichtdurchtrittsöffnung 28 in die Hauptöffnung 30 übergehen. In Figur 2 sind die verschiedenen Bereiche 30, 32, 34 zum besseren Verständnis durch gestrichelte Linien voneinander abgegrenzt. Es versteht sich, dass die Lichtdurchtrittsöffnung 28 diese gestrichelten Linien tatsächlich nicht aufweist. In Figur 2 weisen die seitlichen Nebenöffnungen 32 die gleichen Abmessungen auf. Es wäre jedoch auch denkbar, dass die Nebenöffnungen 32 unterschiedliche Formen und/oder Abmessungen aufweisen.

Figur 4 zeigt die Transmission von Lichtbündeln 36A, 36B, 36C von den Punkten bzw. Bereichen A, B und C der Matrix-Lichtquelle 12 durch die Blende 24 bzw. ihre Lichtdurchtrittsöffnung 28. Der Durchmesser dA, dB der Lichtbündel 36A, 36B von den Punkten bzw. Bereichen A, B wird durch die Apperturblende 26 beschränkt, während das Lichtbündel 36C von Punkt bzw. Bereich C durch die Blende 24 abgeschnitten wird. Ohne die Blende 24 hätte das Lichtbündel 36C den gleichen Durchmesser dC wie die Lichtbündel 36A und 36B.

Die zentrale Hauptöffnung 30 weist eine Höhe h30 auf, die derart gewählt ist, dass ein Durchmesser dA, dB von mindestens einem Lichtbündel 36A, 36B, das von mindestens einer zentralen Einzellichtquelle der Matrix-Lichtquelle 12 ausgesandt wurde, die sich bspw. im Punkt oder Bereich A oder B der Matrix-Lichtquelle 12 befindet, durch die Blende 24 nicht beschränkt ist.

Ferner kann der Figur 4 entnommen werden, dass die seitlichen Nebenöffnungen 32 bevorzugt eine Höhe h32 aufweisen, die derart gewählt ist, dass ein Durchmesser dC von mindestens einem Lichtbündel 36C, das von mindestens einer in einem seitlichen Randbereich C der Matrix-Lichtquelle 12 angeordneten Einzellichtquelle ausgesandt wurde, durch die Blende 24 nach oben und unten abgeschnitten ist. Darüber hinaus können die seitlichen Nebenöffnungen 32 jeweils derart in der Blende 24 angeordnet und ausgebildet sein, dass der Durchmesser dC des mindestens einen Lichtbündels 36C, das von mindestens einer in einem seitlichen Randbereich C der Matrix-Lichtquelle 12 angeordneten Einzellichtquelle ausgesandt wurde, durch die Blende 24 auf einem der Hauptöffnung 30 gegenüberliegenden Randbereich 38 der Nebenöffnung 32 abgeschnitten ist.

Die zentrale Hauptöffnung 30 weist bevorzugt eine im Wesentlichen rechteckige Form auf, wobei eine Breite b30 der Hauptöffnung 30 kleiner ist als eine Höhe h30 der Hauptöffnung 30. Die seitlichen Nebenöffnungen 32 weisen vorzugsweise ebenfalls eine im Wesentlichen rechteckige Form auf.

Vorteilhafterweise weist die Lichtdurchtrittsöffnung 28 eine Gesamtbreite b28 auf. Die Breite b30 der zentralen Hauptöffnung 30 ist in etwa 40% bis 60% der Gesamtbreite b28 der Lichtdurchtrittsöffnung 28. Vorzugsweise beträgt die Höhe h32 der Nebenöffnungen 32 in etwa 40% bis 60% der Höhe h30 der zentralen Hauptöffnung 30.

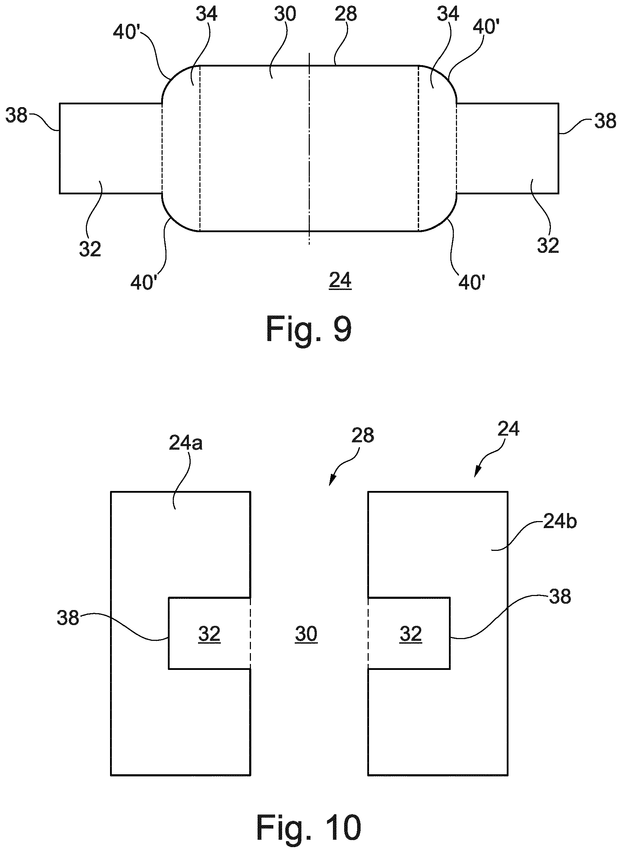

Die Höhe der Lichtdurchtrittsöffnung 28 erweitert sich in dem Übergangsbereich 34 von der Höhe h32 der Nebenöffnungen 32 über einen oberen bzw. unteren Randabschnitt 40 der Lichtdurchtrittsöffnung 28 mit schrägem geradem Verlauf auf die Höhe h30 der Hauptöffnung 30 (vgl. Figur 2). Alternativ ist es aber auch denkbar, dass sich die Höhe der Lichtdurchtrittsöffnung 28 in dem Übergangsbereich 34 von der Höhe h32 der Nebenöffnungen 32 über einen oberen bzw. unteren Randabschnitt 40 der Lichtdurchtrittsöffnung 28 mit gebogenem, insbesondere kreisbogenförmigem, Verlauf auf die Höhe h30 der Hauptöffnung 30 erweitert (vgl. Figur 9).

Der Übergangsbereich 34 weist bevorzugt eine Breite b34 auf, die etwa 5% bis 20% der Gesamtbreite b28 der Lichtdurchtrittsöffnung 28 ist (vgl. Figur 2). Alternativ wäre es auch denkbar, dass der Übergangsbereich 34 eine Breite von Null aufweist (vgl. Figur 10). Der Übergang zwischen einer Höhe der Hauptöffnung 30 und einer Höhe der Nebenöffnungen 32 erfolgt somit abrupt oder stufenförmig. Bei dem Beispiel der Figur 10 ist zudem die Hauptöffnung 30 der Lichtdurchtrittsöffnung 28 der Blende 24 weder nach oben noch nach unten begrenzt. Dies ist möglich, da bei der Blende 24 aus den Figuren 2 und 4 die oberen und unteren Randbereiche der Hauptöffnung 30 die zentralen Lichtbündel 36A bzw. 36B sowieso nicht beschränken.

Die Werte für die Abmessungen (Höhe h30 und Breite b30) der Hauptöffnung 30 sind bevorzugt so gewählt, dass eine numerische Apertur des Linsensystems 14 auf der optischen Achse 22 gerade nicht verringert wird, d.h. keine Wirkung hat. Die numerische Apertur des Systems ist vorzugsweise durch die Apperturblende 26 festgelegt.

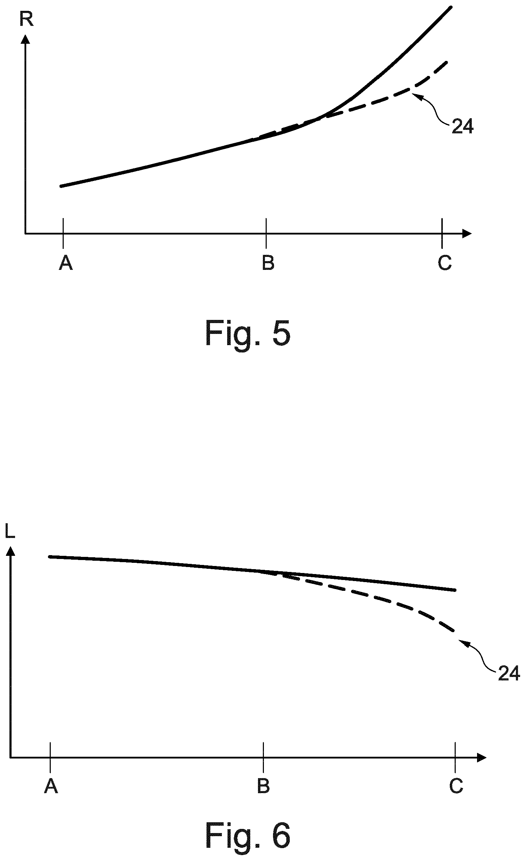

Figur 5 zeigt beispielhaft einen Radius oder Spotradius R eines Lichtbündels 36 einer Einzellichtquelle der Matrix-Lichtquelle 12, wobei die Einzellichtquelle entlang der x-Achse von dem Punkt A (vgl. Figur 3) zu dem Punkt C bewegt wird und auf der y-Achse der Radius R in Abhängigkeit von der Position der Einzellichtquelle zwischen den Punkten A und C aufgetragen ist. Mit durchgezogener Linie ist der Radius R ohne Blende 24 und mit gestrichelter Linie der Radius R mit Blende 24 eingezeichnet. Es ist deutlich zu erkennen, dass der Radius R (und damit auch der Durchmesser dA, dB) der Lichtbündel 36A, 36B von den Punkten bzw. Bereichen A, B allenfalls durch die Apperturblende 26 beschränkt ist, nicht jedoch durch die Blende 24, während der Radius R (und damit auch der Durchmesser dC) des Lichtbündels 36C von dem Punkt bzw. Bereich C durch die Blende 24 abgeschnitten wird (vgl. gestrichelte Linie im Bereich C). Ohne die Blende 24 hätte das Bündel 36C einen größeren Durchmesser, bspw. den gleichen Durchmesser dA; dB wie eines der Lichtbündel 36A; 36B (vgl. durchgezogene Linie im Bereich C).

Figur 6 zeigt beispielhaft einen Lichtstrom L eines Lichtbündels 36 einer Einzellichtquelle der Matrix-Lichtquelle 12, wobei die Einzellichtquelle entlang der x-Achse von dem Punkt A (vgl. Figur 3) zu dem Punkt C bewegt wird und auf der y-Achse der Lichtstrom L in Abhängigkeit von der Position der Einzellichtquelle zwischen den Punkten A und C aufgetragen ist. Mit durchgezogener Linie ist der Lichtstrom L ohne Blende 24 und mit gestrichelter Linie der Lichtstrom L mit Blende 24 eingezeichnet. Es ist deutlich zu erkennen, dass der Lichtstrom L der Lichtbündel 36A, 36B von den Punkten bzw. Bereichen A, B durch die Blende 24 keine Verluste erfährt, während der relative Lichtstrom L des Lichtbündels 36C von dem Punkt bzw. Bereich C durch die Blende 24 einen relativen Verlust erfährt (vgl. gestrichelte Linie im Bereich C). Ohne die Blende 24 hätte das Bündel 36C keine Verluste (vgl. durchgezogene Linie im Bereich C).

Eine Verkleinerung des Öffnungswinkels bzw. der numerischen Apertur am Rande des Feldes (bzw. der Lichtabstrahlfläche) der Matrix-Lichtquelle 12 (z.B. um den Punkt bzw. Bereich C herum) führt zwar zu einem Verlust an Lichtstrom, gleichzeitig werden aber auch die Aberrationen (Bildfehler) des Linsensystems 14 reduziert. Diese Verbesserung der Abbildungsqualität ist in Figur 5 anhand des Spotradius R (root mean square (RMS) spot radius) als Funktion der Position der Einzellichtquelle auf der Matrix-Lichtquelle 12 (Feldposition) gezeigt. Die Blende 24 zeigt nur am Rand des Feldes eine Wirkung (Verringerung des Radius R) und nur dort geht durch die Blende 24 Lichtstrom L verloren. Diese Abnahme des Lichtstroms L ist schematisch in Figur 6 gezeigt.

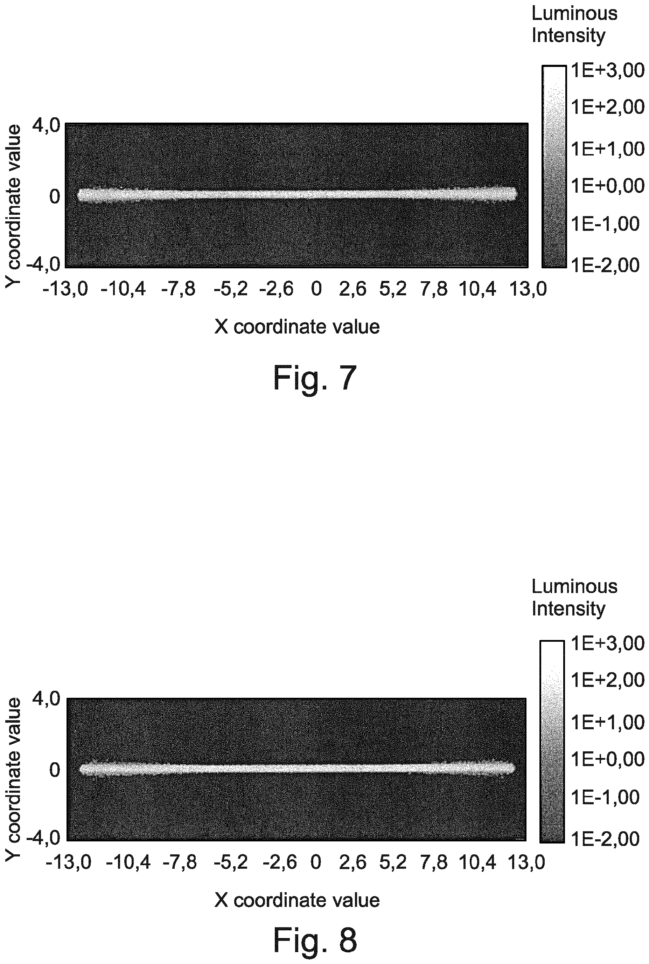

Die positive Wirkung der Blende 24 ist für ein Testbild (leuchtender Streifen auf der Matrix-Lichtquelle 12, durch die optische Achse 22 und entlang ihrer Längsseite) anhand der Figuren 7 und 8 gezeigt, wobei Figur 7 das Testbild ohne Blende 24 und Figur 8 das Testbild mit Blende 24 zeigt. Die dunklen Bereiche in dem Testbild repräsentieren eine geringe (relative) Lichtstärke (z.B. 10⁻²), und je heller die Bereiche sind, desto größer ist die (relative) Lichtstärke (z.B. 10³). Es ist gut zu erkennen, dass die Blende 24 bewirkt, dass der leuchtende Streifen am äußeren Randbereich (etwa ab ±10) etwas schärfer ist. Der leuchtende Streifen ist am Rand des Feldes deutlich breiter, während er in der Mitte weitgehend unverändert ist. Die Verbesserung der Abbildungsqualität geschieht im Wesentlichen in einer Richtung senkrecht zur Längsseite, also in y-Richtung. Die Testbilder der Figuren 7 und 8 wurden beispielhaft anhand eines simulierten optischen Systems erzeugt, das ähnlich aufgebaut ist, wie das optischen System (das Lichtmodul 10) aus Figur 1, und eine numerische Apertur von etwa 0.6 hat.

Alternative Formen der Blende 24 sind in den Figuren 9 und 10 dargestellt. Bei dem alternativen Beispiel der Figur 9 wurde der schräge gerade Randabschnitt 40 des Übergangsbereichs 34 aus Figur 2 durch einen gewölbten Randabschnitt 40' ersetzt. Bevorzugt ist der gewölbte Randabschnitt 40' durch einen Kreisbogen gebildet. Aus Sicht der Lichtdurchtrittsöffnung 28 ist der Kreisbogen bevorzugt nach außen gewölbt. Selbstverständlich wäre es auch denkbar, statt eines geraden Randabschnitts 40 oder eines gebogenen Randabschnitts 40' eine beliebig andere Kurve vorzusehen. In dem in Figur 9 dargestellten Fall passt sich die Blende 24 bzw. deren Lichtdurchtrittsöffnung 28 besser an eine kreisförmige Lichtverteilung der zentralen Lichtbündel, z.B. des Lichtbündels B (vgl. Figur 4), an.

Alternativ kann die Blende 24 auch aus zwei Teilblenden 24a, 24b bestehen, die seitlich im Bereich der Nebenöffnungen 32 angeordnet sind, und zwischen denen die zentrale Hauptöffnung 30 ausgebildet ist. Oberen und unteren Randabschnitte der Hauptöffnung 30 sind nicht erforderlich, da die Blende 24 nahe der optischen Achse 22, also im Zentrum, keine Wirkung zeigen soll. Falls die die Abbildungseigenschaften nur auf der linken oder rechten Seite verbessert werden sollen, genügt es, eine einzige der Teilblenden 24a, 24b einzusetzen.

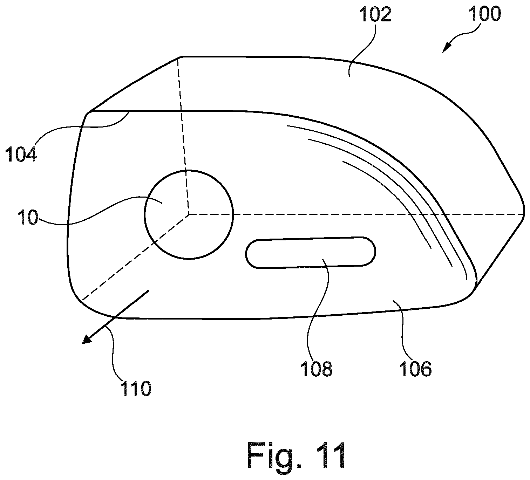

Ein erfindungsgemäßer Kraftfahrzeugscheinwerfer ist beispielhaft in Figur 11 gezeigt und in seiner Gesamtheit mit dem Bezugszeichen 100 bezeichnet. Der Scheinwerfer 100 weist ein Gehäuse 102 auf, das vorzugsweise aus einem Kunststoff gefertigt ist und eine Lichtaustrittsöffnung 104 umfasst, die durch eine transparente Abdeckscheibe 106 verschlossen ist. Die Abdeckscheibe 38 besteht aus Glas oder Kunststoff und kann mit optisch wirksamen Elementen (z.B. Zylinderlinsen, Prismen o.ä.) ausgebildet sein, welche hindurchtretendes Licht streuen, insbesondere in einer horizontalen Richtung. Bevorzugt ist die Abdeckscheibe 106 jedoch ohne optisch wirksame Elemente als eine sog. klare Scheibe ausgebildet. Der Scheinwerfer 100 ist zum Einbau in eine entsprechende Einbauöffnung eines Kraftfahrzeugs ausgebildet. Im Inneren des Gehäuses 102 ist ein erfindungsgemäßes Lichtmodul 10 angeordnet. Es können auch mehrere der Lichtmodule 10 in dem Gehäuse 102 angeordnet sein. Ferner ist es denkbar, dass auch noch andere Lichtmodule, in Figur 11 symbolisch durch das Bezugszeichen 108 dargestellt, im Inneren des Gehäuses 102 angeordnet sind, die bspw. zur Realisierung einer Leuchtenfunktion (z.B. Blinklicht, Abbiege- oder Kurvenlicht, Tagfahrlicht, Positionslicht, etc.) oder zumindest eines Teils einer Scheinwerferfunktion (z.B. Abblendlicht-Grundlicht, Abblendlicht-Spotlicht, Fernlicht-Grundlicht, Fernlicht-Spotlicht, etc.) ausgebildet sind. Eine Haupt-Lichtaustrittsrichtung 110 des von den Lichtmodulen 10, 108 erzeugten Lichts verläuft in etwa parallel zu einer Fahrtrichtung des Kraftfahrzeugs, in dem der Scheinwerfer 100 montiert ist. Bevorzugt verläuft die Lichtaustrittsrichtung 110 auch in etwa parallel zu der optischen Achse 22 des Lichtmoduls 10.

Zusammenfassend betrifft die vorliegende Erfindung also eine Blende 24 für ein sog. Mikro-LED-Matrix Scheinwerfermodul 10. Die Blende 24 ist in der Nähe der Matrix-Lichtquelle 12 positioniert. Die Geometrie der Blenden- oder Lichtdurchtrittsöffnung 28 ist an die Form der Lichtquelle 12 bzw. deren Lichtabstrahlfläche angepasst. Die Geometrie der Lichtdurchtrittsöffnung 28 ergibt sich dadurch, dass Lichtbündel 36A, 36B, die von mindestens einer Einzellichtquelle der Matrix-Lichtquelle 12 ausgesandt wurden, die sich in zentralen Punkten bzw. Bereichen A, B der Matrix-Lichtquelle 12 befinden, durch die Blende 24 nicht oder kaum beeinflusst werden sollen, und andererseits aber Lichtbündel 36C, die von mindestens einer Einzellichtquelle der Matrix-Lichtquelle 12 ausgesandt wurden, die sich in einem Randbereich C der Matrix-Lichtquelle 12 befinden, durch die Blende 24 zumindest in einem äußeren Randbereich abgeschnitten werden sollen. Die Erfindung wurde beispielhaft anhand einer Matrix-Lichtquelle 12 mit einem Seitenverhältnis von 1:4 und einer entsprechend ausgestalteten Geometrie der Blende 24 beschrieben. Selbstverständlich gelten diese Ausführungen in entsprechender Weise auch für eine Matrix-Lichtquelle 12 mit einem anderen Seitenverhältnis und eine Blende 24 mit einer entsprechenden Geometrie.

## Patentansprüche

1. Lichtmodul (10) eines Scheinwerfers (100) eines Kraftfahrzeugs, das Lichtmodul (10) umfassend
- eine Matrix-Lichtquelle (12) mit einer Vielzahl von mehreren matrixartig angeordneten, einzeln ansteuerbaren Einzellichtquellen, die abhängig von ihrer Ansteuerung jeweils mehr oder weniger Licht zum Erzeugen eines einzelnen Lichtpunkts emittieren,
- ein Linsensystem (14) zum Abbilden der von der Matrix-Lichtquelle (12) erzeugten Lichtpunkte auf einer Fahrbahn vor dem Kraftfahrzeug zur Erzeugung einer resultierenden Lichtverteilung des Lichtmoduls (12), wobei das Linsensystem (14) mehrere in einem Strahlengang hintereinander angeordnete Einzellinsen (16, 18, 20) aufweist, und
- eine in den Strahlengang eingebrachte Blende (24), die ausgebildet ist, eine selektive Wirkung auf Randbereiche der abgebildeten Lichtverteilung des Lichtmoduls (12) zu haben,
**dadurch gekennzeichnet, dass**
die Blende (24) in den Strahlengang zwischen der Matrix-Lichtquelle (12) und einer ersten Einzellinse (16) des Linsensystems (14) eingebracht ist,
ein Abstand zwischen der Matrix-Lichtquelle (12) und der Blende (24) in einem Bereich von 2 mm und 6 mm liegt,
die Blende (24) eine Lichtdurchtrittsöffnung (28) umfasst, die eine zentrale Hauptöffnung (30) und seitlich davon Nebenöffnungen (32) aufweist, die flächenmäßig kleiner sind als die Hauptöffnung (30), wobei die Nebenöffnungen (32) jeweils in einem Übergangsbereich (34) der Lichtdurchtrittsöffnung (28) in die Hauptöffnung (30) übergehen,
die zentrale Hauptöffnung (30) eine Höhe (h30) aufweist, die derart gewählt ist, dass ein Durchmesser (dA, dB) von mindestens einem Lichtbündel (36A, 36B), das von mindestens einer zentralen Einzellichtquelle der Matrix-Lichtquelle (12) ausgesandt wurde, durch die Blende (24) nicht beschränkt ist, und
die seitlichen Nebenöffnungen (32) jeweils eine Höhe (h32) aufweisen, die derart ausgebildet ist, dass ein Durchmesser (dC) von mindestens einem Lichtbündel (36C), das von mindestens einer in einem seitlichen Randbereich (C) der Matrix-Lichtquelle (12) angeordneten Einzellichtquelle ausgesandt wurde, durch die Blende (24) nach oben und unten abgeschnitten ist.

2. Lichtmodul (12) nach Anspruch 1, **dadurch gekennzeichnet, dass** die Blende (24) ausgebildet ist, auf Lichtbündel (36A, 36B) aus einem Bereich (A, B) im Zentrum der Matrix-Lichtquelle (12) keinen Einfluss zu haben.

3. Lichtmodul (12) nach Anspruch 1 oder 2, **dadurch gekennzeichnet, dass** die Blende (24) ausgebildet ist, die Lichtstärke in einem Randbereich der abgebildeten Lichtverteilung auf 40% bis 70% eines Wertes ohne die Blende (24) zu reduzieren.

4. Lichtmodul (12) nach einem der vorhergehenden Ansprüche, **dadurch gekennzeichnet, dass** das Lichtmodul (12) eine in dem Strahlengang zwischen zwei Einzellinsen (16, 18, 20) des Linsensystems (14) angeordnete Aperturblende (26) aufweist, und dass Ausgestaltung und Abmessungen der Blende (24) derart gewählt sind, dass eine von der Aperturblende (26) vorgegebene numerische Apertur des Linsensystems (14) auf einer optischen Achse (22) des Lichtmoduls (12) gerade nicht verringert ist.

5. Lichtmodul (12) nach einem der vorhergehenden Ansprüche, **dadurch gekennzeichnet, dass** die seitlichen Nebenöffnungen (32) jeweils derart in der Blende (24) angeordnet und ausgebildet sind, dass ein Durchmesser (dC) von mindestens einem Lichtbündel (36C), das von mindestens einer in einem seitlichen Randbereich (C) der Matrix-Lichtquelle (12) angeordneten Einzellichtquelle ausgesandt wurde, durch die Blende (24) auf einem der Hauptöffnung (30) gegenüberliegenden Randbereich (38) der Nebenöffnung (32) abgeschnitten ist.

6. Lichtmodul (12) nach einem der vorhergehenden Ansprüche, **dadurch gekennzeichnet, dass** die zentrale Hauptöffnung (30) eine im Wesentlichen rechteckige Form aufweist, wobei eine Breite (b30) der Hauptöffnung (30) kleiner ist als eine Höhe (h30) der Hauptöffnung (30) und/oder dass die seitlichen Nebenöffnungen (32) eine im Wesentlichen rechteckige Form aufweisen.

7. Lichtmodul (12) nach einem der vorhergehenden Ansprüche, **dadurch gekennzeichnet, dass** die Lichtdurchtrittsöffnung (28) eine Gesamtbreite (b28) aufweist und dass die zentrale Hauptöffnung (30) eine Breite (b30) aufweist, wobei die Breite (b30) der Hauptöffnung (30) in etwa 40% bis 60% der Gesamtbreite (b28) der Lichtdurchtrittsöffnung (28) ist.

8. Lichtmodul (12) nach einem der vorhergehenden Ansprüche, **dadurch gekennzeichnet**, die zentrale Hauptöffnung (30) eine Höhe (h30) aufweist und dass die seitlichen Nebenöffnungen (32) jeweils eine Höhe (h32) aufweisen, wobei die Höhe (h32) der Nebenöffnungen (32) etwa 40% bis 60% der Höhe (h30) der Hauptöffnung (30) ist.

9. Lichtmodul (12) nach einem der vorhergehenden Ansprüche, **dadurch gekennzeichnet, dass** sich die Höhe der Lichtdurchtrittsöffnung (28) in dem Übergangsbereich (34) von einer Höhe (h32) der Nebenöffnungen (32) über einen Randbereich (40) der Lichtdurchtrittsöffnung (28) mit schrägem oder gebogenem, insbesondere nach außen gewölbtem, Verlauf auf eine Höhe (h30) der Hauptöffnung (30) erweitert.

10. Lichtmodul (12) nach einem der vorhergehenden Ansprüche, **dadurch gekennzeichnet, dass** der Übergangsbereich (34) eine Breite (b34) aufweist, die etwa 5% bis 20% einer Gesamtbreite (b28) der Lichtdurchtrittsöffnung (28) ist oder dass der Übergangsbereich (34) eine Breite (b34) von Null aufweist.

11. Scheinwerfer (100) eines Kraftfahrzeugs, umfassend ein Gehäuse (102) mit einer durch eine transparente Abdeckscheibe (106) verschlossenen Lichtaustrittsöffnung (104) und ein in dem Gehäuse (102) angeordnetes Lichtmodul (10) nach einem der vorhergehenden Ansprüche, das zur Realisierung zumindest eines Teils einer resultierenden Lichtverteilung des Scheinwerfers (100) Licht in einer Haupt-Lichtaustrittsrichtung (110) auf einer Fahrbahn vor dem Kraftfahrzeug abbildet.

## Claims

1. Light module (10) of a headlamp (100) of a motor vehicle, the light module (10) comprising
- a matrix light source (12) with a plurality of several individually controllable individual light sources arranged in a matrix, each of which emits more or less light depending on its control in order to generate a single light spot,
- a lens system (14) for imaging the light spots generated by the matrix light source (12) on a roadway in front of the motor vehicle in order to generate a resulting light distribution of the light module (12), wherein the lens system (14) has a plurality of individual lenses (16, 18, 20) arranged one behind the other along a beam path, and
- a diaphragm (24) introduced into the beam path, which is designed to have a selective effect on edge regions of the imaged light distribution of the light module (12),
**characterised in that**
the diaphragm (24) is introduced into the beam path between the matrix light source (12) and a first individual lens (16) of the lens system (14),
a distance between the matrix light source (12) and the diaphragm (24) is in a range of 2 mm and 6 mm,
the diaphragm (24) comprises a light passage opening (28) which has a central main opening (30) and, to the side thereof, secondary openings (32) which are smaller in area than the main opening (30), the secondary openings (32) each merging into the main opening (30) in a transition region (34) of the light passage opening (28),
the central main opening (30) has a height (h30) which is selected such that a diameter (dA, dB) of at least one light beam (36A, 36B), which was emitted by at least one central individual light source of the matrix light source (12), is not restricted by the diaphragm (24), and
the lateral secondary openings (32) each have a height (h32) which is designed such that a diameter (dC) of at least one light beam (36C), which was emitted by at least one individual light source arranged in a lateral edge region (C) of the matrix light source (12), is cut off upwards and downwards by the diaphragm (24).

2. Light module (12) according to claim 1, **characterised in that** the diaphragm (24) is designed to have no influence on light beams (36A, 36B) from a region (A, B) in the centre of the matrix light source (12).

3. Light module (12) according to claim 1 or 2, **characterised in that** the diaphragm (24) is designed to reduce the light intensity in an edge region of the imaged light distribution to 40% to 70% of a value without the diaphragm (24).

4. Light module (12) according to one of the preceding claims, **characterised in that** the light module (12) has an aperture diaphragm (26) arranged in the beam path between two individual lenses (16, 18, 20) of the lens system (14), and **in that** the design and dimensions of the diaphragm (24) are selected in such a way that a numerical aperture of the lens system (14) on an optical axis (22) of the light module (12) predetermined by the aperture diaphragm (26) is just not reduced.

5. Light module (12) according to one of the preceding claims, **characterised in that** the lateral secondary openings (32) are each arranged and formed in the diaphragm (24) in such a way that a diameter (dC) of at least one light beam (36C), which was emitted by at least one individual light source arranged in a lateral edge region (C) of the matrix light source (12), is cut off by the diaphragm (24) on an edge region (38) of the secondary opening (32) opposite the main opening (30).

6. Light module (12) according to one of the preceding claims, **characterised in that** the central main opening (30) has a substantially rectangular shape, a width (b30) of the main opening (30) being smaller than a height (h30) of the main opening (30) and/or **in that** the lateral secondary openings (32) have a substantially rectangular shape.

7. Light module (12) according to one of the preceding claims, **characterised in that** the light passage opening (28) has an overall width (b28) and **in that** the central main opening (30) has a width (b30), the width (b30) of the main opening (30) being approximately 40% to 60% of the overall width (b28) of the light passage opening (28).

8. Light module (12) according to one of the preceding claims, **characterised in that** the central main opening (30) has a height (h30) and **in that** the lateral secondary openings (32) each have a height (h32), the height (h32) of the secondary openings (32) being approximately 40% to 60% of the height (h30) of the main opening (30).

9. Light module (12) according to one of the preceding claims, **characterised in that** the height of the light passage opening (28) in the transition region (34) increases from a height (h32) of the secondary openings (32) via an edge region (40) of the light passage opening (28) with an oblique or curved, in particular outwardly curved, profile to a height (h30) of the main opening (30).

10. Light module (12) according to one of the preceding claims, **characterised in that** the transition region (34) has a width (b34) which is approximately 5% to 20% of a total width (b28) of the light passage opening (28) or **in that** the transition region (34) has a width (b34) of zero.

11. Headlamp (100) of a motor vehicle, comprising a housing (102) with a light exit opening (104) closed by a transparent cover lens (106) and a light module (10) arranged in the housing (102) according to one of the preceding claims, which, in order to realise at least part of a resulting light distribution of the headlamp (100), images light in a main light exit direction (110) on a roadway in front of the motor vehicle.

## Revendications

1. Module d'éclairage (10) d'un phare (100) d'un véhicule automobile, ledit module d'éclairage (10) comprenant
- une source lumineuse matricielle (12) avec une pluralité de sources lumineuses individuelles agencées de manière matricielle et pouvant être pilotées individuellement, qui émettent respectivement plus ou moins de lumière en fonction de leur pilotage afin de générer un point de lumière individuel,
- un système de lentilles (14) permettant de représenter les points de lumière générés par la source lumineuse matricielle (12) sur une chaussée devant le véhicule automobile afin de générer une répartition lumineuse résultante du module d'éclairage (12), le système de lentilles (14) présentant plusieurs lentilles individuelles (16, 18, 20) agencées les unes derrière les autres sur un trajet de faisceau, et
- un diaphragme (24) mis en place dans le trajet de faisceau et conçu pour avoir un effet sélectif sur les régions de bord de la répartition lumineuse représentée du module d'éclairage (12),
**caractérisé en ce que**
le diaphragme (24) est mis en place dans le trajet de faisceau entre la source lumineuse matricielle (12) et une première lentille individuelle (16) du système de lentilles (14),
une distance entre la source lumineuse matricielle (12) et le diaphragme (24) est comprise dans une plage de 2 mm à 6 mm,
le diaphragme (24) comprend un orifice de passage de lumière (28) qui présente un orifice principal central (30) et des orifices secondaires (32) situés latéralement par rapport à celui-ci et dont la surface est inférieure à celle de l'orifice principal (30), les orifices secondaires (32) se transformant respectivement en orifice principal (30) dans une région de transition (34) de l'orifice de passage de lumière (28),
l'orifice principal central (30) présente une hauteur (h30) choisie de façon telle qu'un diamètre (dA, dB) d'au moins un faisceau de lumière (36A, 36B) qui a été émis par au moins une source lumineuse individuelle centrale de la source lumineuse matricielle (12) n'est pas limité par le diaphragme (24), et les orifices latéraux secondaires (32) présentent respectivement une hauteur (h32) conçue de façon telle qu'un diamètre (dC) d'au moins un faisceau de lumière (36C) qui a été émis par au moins une source lumineuse individuelle agencée dans une région de bord latérale (C) de la source lumineuse matricielle (12) est coupé vers le haut et vers le bas par le diaphragme (24).

2. Module d'éclairage (12) selon la revendication 1, **caractérisé en ce que** le diaphragme (24) est conçu pour n'avoir aucune influence sur les faisceaux de lumière (36A, 36B) provenant d'une région (A, B) au centre de la source lumineuse matricielle (12).

3. Module d'éclairage (12) selon la revendication 1 ou 2, **caractérisé en ce que** le diaphragme (24) est conçu pour réduire l'intensité lumineuse dans une région de bord de la répartition lumineuse représentée à une valeur comprise entre 40 % et 70 % d'une valeur sans le diaphragme (24).

4. Module d'éclairage (12) selon l'une des revendications précédentes, **caractérisé en ce que** le module d'éclairage (12) présente un diaphragme d'ouverture (26) agencé dans le trajet du faisceau entre deux lentilles individuelles (16, 18, 20) du système de lentilles (14), et **en ce que** la conception et les dimensions du diaphragme (24) sont choisies de façon telle qu'une ouverture numérique du système de lentilles (14) prédéfinie par le diaphragme d'ouverture (26) n'est précisément pas réduite sur un axe optique (22) du module d'éclairage (12).

5. Module d'éclairage (12) selon l'une des revendications précédentes, **caractérisé en ce que** les orifices latéraux secondaires (32) sont agencés et réalisés respectivement dans le diaphragme (24) de façon telle qu'un diamètre (dC) d'au moins un faisceau de lumière (36C) qui a été émis par au moins une source lumineuse individuelle agencée dans une région de bord latérale (C) de la source lumineuse matricielle (12) est coupé par le diaphragme (24) sur une région de bord (38) de l'orifice secondaire (32) opposée à l'orifice principal (30).

6. Module d'éclairage (12) selon l'une des revendications précédentes, **caractérisé en ce que** l'orifice principal central (30) présente une forme essentiellement rectangulaire, une largeur (b30) de l'orifice principal (30) étant inférieure à une hauteur (h30) de l'orifice principal (30) et/ou **en ce que** les orifices latéraux secondaires (32) présentent une forme essentiellement rectangulaire.

7. Module d'éclairage (12) selon l'une des revendications précédentes, **caractérisé en ce que** l'orifice de passage de lumière (28) présente une largeur totale (b28) et **en ce que** l'orifice principal central (30) présente une largeur (b30), la largeur (b30) de l'orifice principal (30) représentant environ 40 % à 60 % de la largeur totale (b28) de l'orifice de passage de lumière (28).

8. Module d'éclairage (12) selon l'une des revendications précédentes, **caractérisé en ce que** l'orifice principal central (30) présente une hauteur (h30) et **en ce que** les orifices secondaires latéraux (32) présentent respectivement une hauteur (h32), la hauteur (h32) des orifices secondaires (32) représentant environ 40 % à 60 % de la hauteur (h30) de l'orifice principal (30).

9. Module d'éclairage (12) selon l'une des revendications précédentes, **caractérisé en ce que** la hauteur de l'orifice de passage de lumière (28) augmente, dans la région de transition (34), d'une hauteur (h32) des orifices secondaires (32) jusqu'à une hauteur (h30) de l'orifice principal (30) en passant par une région de bord (40) de l'orifice de passage de lumière (28), selon un tracé incliné ou incurvé, en particulier incurvé vers l'extérieur.

10. Module d'éclairage (12) selon l'une des revendications précédentes, **caractérisé en ce que** la région de transition (34) présente une largeur (b34) représentant environ 5 % à 20 % d'une largeur totale (b28) de l'orifice de passage de lumière (28), ou **en ce que** la région de transition (34) présente une largeur (b34) égale à zéro.

11. Phare (100) d'un véhicule automobile, comprenant un boîtier (102) qui présente un orifice de sortie de lumière (104) fermé par une vitre de recouvrement (106) transparente, et un module d'éclairage (10) selon l'une des revendications précédentes agencé dans le boîtier (102), qui produit de la lumière dans une direction de sortie de lumière principale (110) sur une chaussée devant le véhicule automobile afin de mettre en oeuvre au moins une partie d'une répartition de lumière résultante du phare (100).
